# EUROPÄISCHE PATENTSCHRIFT

(11) **EP 2 031 279 B1**
(45) Veröffentlichungstag und Bekanntmachung des Hinweises auf die Patenterteilung: **21.03.2012**
(21) Anmeldenummer: 08012200.5
(22) Anmeldetag: 07.07.2008
(51) Int. Cl.: F16H 57/04

(54) **Schaltgetriebe mit Zahnradpumpe**
Transmission with gear wheel pump
Boîte de vitesse dotée d'une pompe à roue dentée

(30) Priorität: 31.08.2007 DE 102007041318
(43) Veröffentlichungstag der Anmeldung: 04.03.2009
(73) Patentinhaber: GM Global Technology Operations LLC, Detroit, MI 48265-3000 (US)
(72) Erfinder: Bönning, Jörg, 64285 Darmstadt (DE); Sporleder, Jan, 67657 Kaiserslautern (DE)
(74) Vertreter: Kraenzmer, Martin

(56) Entgegenhaltungen:
- GB-A- 458 379
- US-A- 2 645 305
- US-A- 3 601 515

## Beschreibung

Die vorliegende Erfindung betrifft ein Schaltgetriebe, vornehmlich für ein Kraftfahrzeug, wobei das Schaltgetriebe eine Zahnradpumpe zur Förderung von Schmieröl umfasst.

Bei manuellen Schaltgetrieben werden im Gegensatz zu automatischen Schaltgetrieben üblicherweise passive Strategien zur Verteilung von Schmieröl innerhalb des Getriebes angewandt, um alle Komponenten des Getriebes ausreichend mit Öl zur Schmierung bzw. Kühlung zu versorgen. Die Verteilung des Schmieröls erfolgt hierbei im Wesentlichen durch in einen Ölsumpf eintauchende Zahnräder des Getriebes, welche das Schmieröl aufgrund ihrer Bewegung aus dem Ölsumpf mitschleppen und durch ihre Rotation abschleudern und somit innerhalb des Getriebes weiterbefördern.

Jedoch kann hierdurch keine gezielte und gleichmäßige Versorgung der Komponenten unter allen Bedingungen gewährleistet werden, da das rotationsbedingte Abschleudern einigen Einflussfaktoren unterliegt. Beispielsweise erfolgt in Situationen, in welchen das Schmieröl noch kalt und daher zähflüssig ist, die Verteilung des Schmieröls an alle Komponenten nicht rasch genug. Zudem muss immer ein relativ hoher Schmierölpegel gewährleistet sein, um ein ausreichendes Eintauchen der Zahnräder in den Ölsumpf zu bewirken. Darüber hinaus rotieren bei einer Rückwärtsfahrt des Kraftfahrzeugs ein Teil der Zahnräder des Getriebes in umgekehrter Richtung, so dass das auf diesen Zahnrädern mitgeschleppte Schmieröl in eine andere Richtung abgeschleudert wird als bei Vorwärtsfahrt, was zu einer ungenügenden Schmierung von Teilen des Getriebes führen kann.

Um aktiv und gezielt Schmieröl zu allen Komponenten befördern zu können, muss daher eine Ölpumpe eingesetzt werden, was die Verwendung eines zusätzlichen Bauteils und auch konstruktive Anpassungen im Schaltgetriebe erfordert und somit erhöhte Kosten nach sich zieht.

In US 2 645 305 A wurde vorgeschlagen, bei einem Schaltgetriebe mit mehreren unterschiedliche Übersetzungsverhältnisse realisierenden Radsätzen eine solche Ölpumpe als eine Außenzahnradpumpe zu realisieren, wobei eines von zwei miteinander kämmenden Zahnrädern dieser Außenzahnradpumpe auch den Radsätzen angehört. Um Öl aus einem Ölsumpf zu einem Kämmungsbereich der Zahnräder zu fördern, ist eines der Zahnräder auf einem Teil seines Umfangs von einem rinnenartigen Gehäuse umgeben.

Der Umfang der Erfindung wird durch die Ansprüche angegeben. Indem das Gehäuse in Richtung der Achse des gemeinsamen Zahnrads beweglich angeordnet ist, kann dessen axialen Bewegungen exakt folgen. Die axiale Ausdehnung des Pumpengehäuses braucht daher das axiale Spiel des Zahnrades nicht zu berücksichtigen, sondern kann exakt der axialen Ausdehnung des gemeinsamen Zahnrades entsprechen, was für einen guten Wirkungsgrad der Pumpe wichtig ist. Da das zweite Zahnrad im Gehäuse schwimmend gelagert ist, benötigt es keine fixierende Achse, um in seiner Position festgehalten zu werden. Da das Zahnrad gänzlich von Schmieröl umgeben ist, kann es sich leicht im Gehäuse drehen, wobei die Zähne entlang einer Innenwand des Gehäuses auf einem dünnen Ölfilm gleiten.

Insbesondere bieten sich Vorteile hinsichtlich einer flexiblen Konstruktion, wenn das dem Radsatz und der Zahnradpumpe gemeinsame Zahnrad auf der Antriebswelle oder der Abtriebswelle montiert ist. So kann in Anhängigkeit der konstruktiven Gegebenheiten innerhalb des Schaltgetriebes die Zahnradpumpe an dasjenige Zahnrad angekoppelt werden, welches die besten Voraussetzungen einerseits hinsichtlich der platzsparenden Unterbringung der Zahnradpumpe und andererseits hinsichtlich der besten Wirkungsweise der Zahnradpumpe bietet.

Um zwischen verschiedenen Übersetzungsstufen umschalten zu können, ist üblicherweise jedem Radsatz eine Kupplung, meist in Form einer Sperrsynchronisiereinrichtung, zugeordnet. Im Falle des Radsatzes, der das gemeinsame Zahnrad aufweist, ist diese Kupplung vorzugsweise zwischen dem gemeinsamen Zahnrad und der Abtriebswelle angeordnet bzw. das gemeinsame Zahnrad ist mit der Antriebswelle dauerhaft kraftschlüssig verbunden, um sicherzustellen, dass die Zahnradpumpe kontinuierlich arbeitet, wenn das Getriebe in Betrieb ist. Dabei kann das gemeinsame Zahnrad auf der Antriebswelle oder auch auf einer beliebigen anderen Welle des Getriebes angeordnet sein.

Durch die dauerhafte kraftschlüssige Verbindung des gemeinsamen Zahnrads zur Antriebswelle ist ferner auf einfache Weise sichergestellt, dass die Pumpe stets in der richtigen Förderrichtung läuft und eine hinreichende Schmierwirkung sowohl im Vorwärts- als auch im Rückwärtsgang entfaltet. Zudem kann die Zahnradpumpe in einer Situation nach einem Stillstand des Fahrzeugs sehr rasch eine gute Pumpwirkung erreichen und so die passive Schmierung des Getriebes unterstützen.

Ein weiterer Vorteil dieser dauerhaften Verbindung ist, dass die Zahnradpumpe die Drehung der Antriebswelle fortlaufend bedämpft. Klapper- und Rasselgeräusche, die insbesondere im Leerlauf des Getriebes durch eine ungleichförmige Drehung der Antriebswelle entstehen können, werden so deutlich reduziert. Die Dämpfung durch die Zahnradpumpe bewirkt ferner, dass im Leerlauf die Antriebswelle schnell zum Stillstand kommt. Dadurch wird beim Umschalten zwischen Vor- und Rückwärtsgang ein Schlaggeräusch unterdrückt, das herkömmlicherweise häufig beim Schließen der Kupplung zwischen Motor und Getriebe auftritt.

Hinsichtlich der Förderleistung und der Betriebssicherheit der Zahnradpumpe ist es weiter vorteilhaft, wenn das gemeinsame Zahnrad unter mehreren auf einer gleichen Welle montierten Zahnrädern den größten Durchmesser besitzt. Das gemeinsame Zahnrad kann somit am weitesten in den Ölsumpf eintauchen und auch bei niedrigem Ölstand noch eine ausreichende Menge an Öl aufnehmen und in die Zahnradpumpe hinein befördern. Des Weiteren hat das gemeinsame Zahnrad unter allen Zahnrädern der Welle die größte Umfangsgeschwindigkeit und bewirkt folglich die höchstmögliche Drehzahl der Zahnradpumpe.

Um die für den Betrieb der Zahnradpumpe erforderliche Antriebsleistung zu minimieren, ist es vorteilhaft, wenn das gemeinsame Zahnrad das kleinste unter mehreren auf einer gleichen Welle montierten Zahnrädern ist, die in das Reservoir eintauchen, wenn dieses eine vorgeschriebene Menge an Öl enthält. So arbeitet die Zahnradpumpe im Wesentlichen nur während einer Startphase des Getriebes, bis aus dem Reservoir eine so große Menge an Öl entnommen und im Getriebe verteilt ist, dass das gemeinsame Zahnrad nicht mehr in das Reservoir eintaucht.

Hierbei ist es insbesondere vorteilhaft, wenn der Teil des Umfangs, auf welchem das gemeinsame Zahnrad vom Gehäuse umschlossen ist, weniger als die Hälfte des Umfangs des gemeinsamen Zahnrads ist. So kann das Gehäuse der Zahnradpumpe sehr leicht von einer Seite her am gemeinsamen Zahnrad platziert werden, was den Zusammenbau des Getriebes sowie eine spätere eventuelle Wartung erheblich vereinfacht.

Weitere Vorteile hinsichtlich der Größe des Gehäuses ergeben sich, wenn eine tiefste Stelle des Umfangs des gemeinsamen Zahnrads nicht von dem Gehäuse umschlossen ist. Das gemeinsame Zahnrad taucht in einem unteren Bereich und somit an der tiefsten Stelle seines Umfangs in den Ölsumpf ein und befördert von dort in den Zwischenräumen seiner Zähne das Öl in das Gehäuse hinein, wo sich das Öl vor einem Kämmungsbereich der beiden Zahnräder anstaut. Somit muss das Gehäuse den Raum vor dem Kämmungsbereich überdecken, jedoch nicht den Bereich des gemeinsamen Zahnrads, aus welchem dieses das Öl noch druckfrei aus dem Ölsumpf herausbefördert. Daher kann das Gehäuse von seinen Abmessungen her klein gehalten werden.

Darüber hinaus ist es insbesondere vorteilhaft, wenn dass das Gehäuse der Zahnradpumpe und/oder das zweite Zahnrad aus einem Kunststoffmaterial bestehen. Somit kann das Gehäuse eine erforderliche Flexibilität hinsichtlich einer formschlüssigen Anordnung am gemeinsamen Zahnrad erhalten. Gleichzeitig kann eine Reibung der beiden Zahnräder gegeneinander reduziert werden, so dass insbesondere das gemeinsame Zahnrad keinem erhöhten Verschleiß unterliegt.

Eine gute Fixierung innerhalb des Schaltgetriebes kann erreicht werden, wenn das Gehäuse an einer Schaltwelle des Schaltgetriebes gehalten ist. Die Schaltwelle kann das Gehäuse in seiner Anordnung gegenüber dem gemeinsamen Zahnrad fixieren, ohne dass es weiterer konstruktiver Mittel zur Fixierung innerhalb des Getriebegehäuses bedarf. Aufgrund einer parallelen Anordnung der Schaltwelle gegenüber den Getriebewellen kann zudem gleichzeitig die axiale Beweglichkeit des Gehäuses ermöglicht werden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Teilschnitt durch ein Schaltgetriebe mit einer Zahnradpumpe gemäß der Erfindung; und
- Fig. 2: einen schematischen Schnitt entlang einer Linie A-A aus Fig. 1.

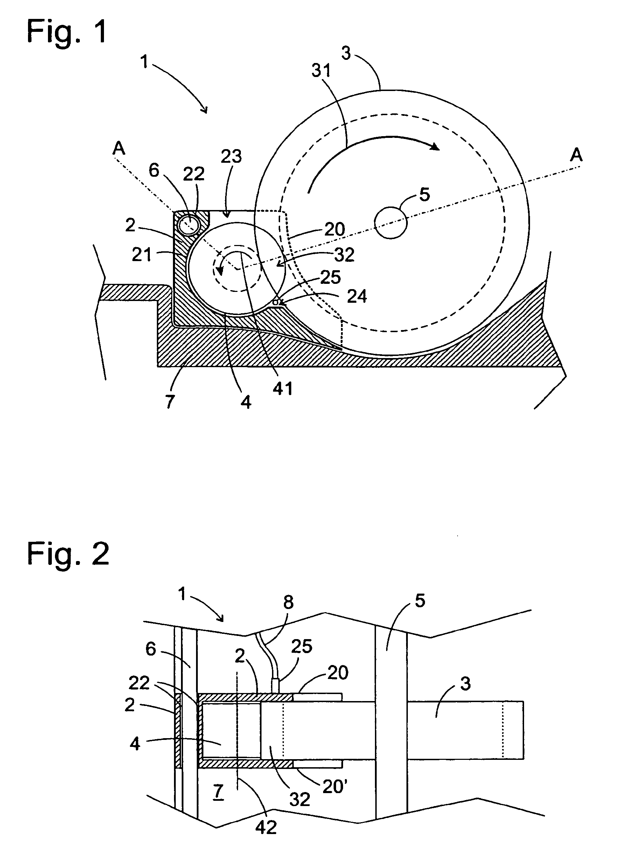

In Fig. 1 ist ein Ausschnitt aus einem Schaltgetriebe eines Kraftfahrzeugs dargestellt, insbesondere ein schematischer Teilschnitt durch das Schaltgetriebe mit einer erfindungsgemäßen Außenzahnradpumpe.

Das Schaltgetriebe umfasst eine Antriebswelle und eine Abtriebswelle und mehrere Radsätze von Zahnrädern, welche Antriebs- und Abtriebswelle mit unterschiedlichen Übersetzungsverhältnissen koppeln und innerhalb eines Getriebegehäuses 7 angeordnet sind. Das Schaltgetriebe umfasst zudem eine Zahnradpumpe 1, welche ebenfalls vom Getriebegehäuse 7 umschlossen ist.

Die Zahnradpumpe 1 ist als Außenzahnradpumpe ausgebildet und besitzt ein Gehäuse 2, ein erstes Zahnrad 3 und ein zweites Zahnrad 4, wobei das Gehäuse 2 und das zweite Zahnrad 4 aus einem Kunststoffmaterial bestehen.

Das erste Zahnrad 3 ist durch ein Getrieberad eines Radsatzes des Schaltgetriebes gebildet, so dass der Radsatz und die Zahnradpumpe 1 ein gemeinsames Zahnrad 3 besitzen. Dieses Zahnrad 3 ist auf einer Getriebewelle 5 drehfest angeordnet, wird von dieser angetrieben und rotiert in einer Rotationsrichtung 31 um die Achse der Getriebewelle 5. Die Getriebewelle 5 kann insbesondere die Antriebs- oder die Abtriebswelle des Getriebes sein; vorzugsweise ist sie die Antriebswelle, da diese stets in derselben Richtung rotiert, während die Drehrichtung der Abtriebswelle variabel ist, je nachdem, ob ein Vorwärts- oder ein Rückwärtsgang in dem Getriebe eingelegt ist.

Einer nicht gezeichneten Abwandlung zufolge ist die das erste Zahnrad 3 tragende Getriebewelle 5 die Abtriebswelle des Getriebes. In diesem Fall gehört das erste Zahnrad 3 zweckmäßigerweise zusammen mit einem auf der Antriebswelle des Getriebes drehfesten weiteren Zahnrad zu einem gleichen Radsatz, und das weitere Zahnrad ist auf der Antriebswelle drehfest, während das gemeinsame Zahnrad durch eine Sperrsynchronisationseinrichtung von der es tragenden Abtriebswelle abkoppelbar. Auch so kann sichergestellt werden, dass das erste Zahnrad jederzeit, unabhängig vom gerade eingelegten Gang, in einer gleichen Richtung mit der Antriebswelle mit läuft.

Unter allen auf der Getriebewelle 5 angeordneten Getrieberädern hat das Getrieberad 3 den größten Durchmesser. Das zweite Zahnrad 4 besitzt einen deutlich kleineren Durchmesser als das Getrieberad 3. Das Getrieberad 3 ist an der Getriebewelle 5 spielhaltig hinsichtlich kleiner Bewegungen in axialer Richtung angebracht. Das Getrieberad 3 kämmt mit dem zweiten Zahnrad 4 in einem Bereich 32.

Das Gehäuse 2 hat einen prismatischen Grundkörper, welcher das zweite Zahnrad 4 umschließt. Auf einer dem Getrieberad 3 zugewandten Seite und einem daran angrenzenden Bereich einer oberen Seite ist das Gehäuse 2 offen, wobei das Getrieberad 3 mit einem Spiel zwischen zwei das Gehäuse 2 beidseitig abschließende Flanken 20 eingreift, das deutlich kleiner ist als das axiale Spiel des Getrieberades 3 and der Getriebewelle 5. An einem unteren Teil in Richtung einer tiefsten Stelle des Getrieberads 3 hin ist das Gehäuse 2 verlängert und läuft in einer Rinne aus, welche das Getrieberad 3 auf einem Teil dessen Umfangs umschließt, wobei die tiefste Stelle des Getrieberads nicht vom Gehäuse 2 überdeckt ist.

Die seitlichen Flanken 20 überdecken das Getrieberad 3 beidseitig auf einem Teil seines Umfangs, wobei sich die Überdeckung so weit in Richtung der Achse des Getrieberads 3 erstreckt, dass Zähne des Getrieberads 3 vollständig überdeckt sind. In der gezeigten Darstellung ist ein eine vom Betrachter abgewandte Flanke 20 begrenzender Rand des Gehäuses 2 als gestrichelte Linie dargestellt, da die Flanke 20 vom Getrieberad 3 verdeckt ist.

Das Gehäuse 2 ist an einer Unterseite und an einer von dem Getrieberad 3 abgewandten Seite geschlossen. Das Gehäuse 2 besitzt eine Gehäusewand, deren Innenkontur 21 das zweite Zahnrad 4 auf einer von dem Getrieberad 3 abgewandten Seite etwa auf einer Hälfte des Umfangs des zweiten Zahnrads 4 dicht umschließt und unterhalb des Kämmungsbereiches 32, in welchem das Getrieberad 3 mit dem zweiten Zahnrad 4 in Eingriff steht, einen kleinen Hohlraum 24 ausbildet. Am Hohlraum 24 ist durch eine der Flanken 20 des Gehäuses 2 hindurch ein Auslass 25 gebildet.

Entlang seiner Unterseite liegt das Gehäuse 2 formschlüssig an einem das Getrieberad 3 umgebenden Bereich eines Gehäuses 7 des Schaltgetriebes an. Vom Getriebegehäuse 7 ist in der gezeigten Ansicht nur ein kleiner Ausschnitt dargestellt.

An einer von dem Getrieberad 3 abgewandten oberen Kante des Gehäuses 2 besitzen die Flanken 20 eine parallel zur Getriebeachse 5 verlaufende zylindrische Aussparung 22, durch welche hindurch eine Schaltwelle 6 des Schaltgetriebes verläuft. Die Schaltwelle 6 ist hierbei nicht mit dem Gehäuse 2 fest verbunden, so dass das Gehäuse 2 in axialer Richtung entlang der Schaltwelle 6 beweglich gehalten ist und somit einer Bewegung des Getrieberads 3 in einer Richtung entlang der Getriebewelle 5 exakt folgen kann.

Aufgrund der Begrenzung durch das Gehäuse 7 des Schaltgetriebes, der durch die Aussparung 22 verlaufenden Schaltwelle 6 und das Getrieberad 3 sind das Gehäuse 2 und das durch das Gehäuse 2 umschlossene zweite Zahnrad 4 in ihrer Position fixiert.

Fig. 2 zeigt nun einen Schnitt entlang der Linie A-A aus Fig. 1, von oben betrachtet.

Die Zahnradpumpe 1 ist mit ihrem Gehäuse 2 an der Schaltwelle 6 axial verschiebbar gehalten. Die beiden Flanken 20, 20' des Gehäuses 2 umschließen das zweite Zahnrad 4 von beiden Seiten mit minimalem Spiel, das für eine freie Drehung des Zahnrades 4 erforderlich ist. Das Zahnrad 4 ist nicht über eine Welle drehbar in dem Gehäuse 2 aufgehängt, sondern schwimmt frei in dessen Innerem, wobei es von dem Gehäuse 2 in radialer Richtung so eng umschlossen ist, dass der Eingriff zwischen den Zähnen der Zahnräder 3, 4 in dem Kämmungsbereich 32 nicht verloren gehen kann. Das zweite Zahnrad 4 kämmt mit dem Getrieberad 3 im Bereich 32. Der Auslass 25 verbindet den unterhalb des Kämmungsbereichs 32 gebildeten Hohlraum 24 (hier nicht sichtbar) mit einer Ölleitung 8.

Die Flanken 20, 20' des Gehäuses 2 liegen dicht an beiden Seiten des Getrieberads 3 an. Entsprechend dem in Fig. 1 gezeigten Schnittverlauf sind die Flanken 20, 20' teilweise geschnitten und teilweise in einer Draufsicht dargestellt. Unterliegt das auf der Welle 5 angeordnete Getrieberad 3 einer Bewegung in axialer Richtung der Welle 5 im Rahmen der spielhaltigen Anordnung an der Welle 5, so bewegen sich die dicht anliegenden Flanken 20, 20' mit dem Getrieberad 3 in die Bewegungsrichtung mit, wobei dann das Gehäuse 2 insgesamt gegenüber der Schaltwelle 6 verschoben wird.

Wenn das Kraftfahrzeug und somit auch das Schaltgetriebe stillsteht, so sammelt sich Schmieröl in einem Bereich des Getriebegehäuses 7, in welchem der tiefste Bereich des Getrieberads 3 angeordnet ist, zu einem Ölsumpf (nicht dargestellt), in den wenigstens ein unterer Teil des Getrieberades 3, eventuell auch ein Teil des Gehäuses 2 eintaucht. Beginnt das Schaltgetriebe zu arbeiten, so treibt die Rotation der Getriebewelle 5 das Getrieberad 3 an. In den Zwischenräumen der Zähne des Getrieberads 3 wird Schmieröl aus dem Ölsumpf mittransportiert und in Richtung des zweiten Zahnrads 4 in das Gehäuse 2 hinein befördert. Aufgrund der Kämmung des Getrieberads 3 mit dem zweiten Zahnrad 4 wird das Schmieröl jedoch vor dem Kämmungsbereich 32 zurückgehalten und staut sich im Hohlraum 24 auf. Andere ebenfalls in den Ölsumpf eintauchende Getrieberäder der Welle 5 nehmen ebenfalls Öl aus dem Ölsumpf mit und schleudern es ab, wodurch zusätzlich Öl im Innern des Getriebegehäuses 7 verteilt wird.

Das von den anderen Getrieberädern nach oben in den Innenraum des Getriebegehäuses 7 abgeschleuderte Schmieröl tropft von oben her wieder auf die Zahnradpumpe 1 zurück und sammelt sich in einem Saugraum 23, welcher durch die Seitenwände des nach oben offenen Gehäuses 2 und das zweite Zahnrad 4 gebildet ist. Das Getrieberad 3 treibt das zweite Zahnrad 4 an, so dass das zweite Zahnrad 4 das im Saugraum 23 gesammelte Schmieröl im Zwischenraum seiner Zähne entlang der Innenkontur 21 des Gehäuses 2 weiter in Richtung des Hohlraums 24 transportiert, wo es ebenfalls unterhalb des Kämmungsbereichs 32 zurückgehalten wird. Durch das zwischen den Zähnen des zweiten Zahnrads 4 transportierte Öl bildet sich entlang der Innenkontur 21 des Gehäuses 2 ein Ölfilm, so dass das zweite Zahnrad 4 im Gehäuse 2 schwimmend gelagert ist.

Somit wird durch die Drehung von Getrieberad 3 und zweitem Zahnrad 4 innerhalb der Zahnradpumpe 1 ein Überdruck im Hohlraum 24 aufgebaut, welcher hiermit einen Druckraum der Zahnradpumpe 1 bildet. Über den an einer Seite des Hohlraums 24 angeordneten Auslass 25 und die daran angeschlossene Ölleitung 8 kann das aufgestaute Schmieröl gezielt und unter Druck aus der Zahnradpumpe 1 abgeführt und zu den Komponenten des Schaltgetriebes befördert werden.

Um von oben herabtropfendes Öl effektiv zu sammeln, kann das Gehäuse 2 rings um den Saugraum 23 durch einen nicht dargestellten, nach oben offenen Fangtrichter erweitert sein.

In dem Maße, wie die Zahnradpumpe den Ölsumpf leer schöpft und das Öl im Getriebe verteilt, verkleinert sich der Umfangsbereich des Zahnrades 3, das in den Ölsumpf eintaucht und Öl daraus mitnimmt. So nimmt bei hoher Geschwindigkeit die Fördereffektivität der Pumpe ab. Da der Ölbedarf des Getriebes nicht linear proportional zur Geschwindigkeit anwächst, hat dies die vorteilhafte Wirkung, dass der Anteil der Leistung eines das Getriebe antreibenden Motors, der von der Zahnradpumpe 1 verbraucht wird, bei hoher Geschwindigkeit kleiner und der Wirkungsgrad des Getriebes dementsprechend besser wird.

Einer Abwandlung der Erfindung zufolge wird dieser Effekt besonders wirksam ausgenutzt, indem das gemeinsame Zahnrad 3 nicht das absolut größte an der Welle 5 ist, sondern das kleinste unter mehreren Zahnrädern, die in den Ölsumpf eintauchen, wenn dieser in einem für das Getriebe spezifizierten Sollbereich liegt. Wenn das Getriebe gestartet wird, taucht so das gemeinsame Zahnrad 3 in den Ölsumpf und fördert Öl, so dass alle zu schmierenden Teile des Getriebes in kurzer Zeit nach dem Start gut geschmiert sind. Infolge des dadurch abfallenden Spiegels des Ölsumpfs taucht das Zahnrad 3 alsbald nicht mehr ein, die Zahnradpumpe 1 läuft im Wesentlichen bei geringem Bedarf an Antriebsleistung leer (wobei eine erforderliche Schmierung der Pumpe 1 selbst durch von oben in den Saugraum 23 tropfendes Öl sichergestellt ist), und die weitere Schmierung ist allein durch wenigstens ein weiterhin in den Sumpf eintauchendes Zahnrad gewährleistet, das größer als das gemeinsame Zahnrad 3 ist.

### Bezugszeichenliste

Zahnradpumpe 1
Gehäuse der Zahnradpumpe 2
Innenkontur 21
Aussparung 22
Saugraum 23
Hohlraum, Druckraum 24
Auslass 25
Erstes Zahnrad, gemeinsames Zahnrad 3
Rotationsrichtung 31
Zweites Zahnrad 4
Rotationsrichtung 41
Rotationsachse 42
Getriebewelle 5
Schaltwelle 6
Gehäuse des Schaltgetriebes 7
Ölleitung 8

## Patentansprüche

1. Schaltgetriebe mit mindestens einer Antriebswelle, einer Abtriebswelle und mehreren Radsätzen zum Koppeln von Antriebs- und Abtriebswelle mit unterschiedlichen Übersetzungsverhältnissen und einer als Außenzahnradpumpe ausgebildeten Zahnradpumpe (1), die angeordnet ist, um Schmieröl aus einem Reservoir des Schaltgetriebes zu fördern, wobei eines von zwei miteinander kämmenden Zahnrädern (3, 4) der Zahnradpumpe (1) einem der Radsätze angehört und die Zahnradpumpe (1) ein Gehäuse (2) aufweist, welches das der Zahnradpumpe (1) und dem einen Radsatz gemeinsame Zahnrad (3) nur auf einem Teil seines Umfangs umschließt, **dadurch gekennzeichnet, dass** das Gehäuse (2) in Richtung der Achse des gemeinsamen Zahnrads (3) beweglich ist und das zweite Zahnrad (4) im Gehäuse (2) schwimmend gelagert ist.

2. Schaltgetriebe nach Anspruch 1, **dadurch gekennzeichnet, dass** das dem Radsatz und der Zahnradpumpe (1) gemeinsame Zahnrad (3) auf der Antriebswelle oder der Abtriebswelle montiert ist.

3. Schaltgetriebe nach Anspruch 1 oder 2, **dadurch gekennzeichnet, dass** das dem Radsatz und der Zahnradpumpe (1) gemeinsame Zahnrad (3) mit der Antriebswelle (5) dauerhaft kraftschlüssig verbunden ist.

4. Schaltgetriebe nach einem der vorhergehenden Ansprüche, **dadurch gekennzeichnet, dass** das gemeinsame Zahnrad (3) unter mehreren auf einer gleichen Welle (5) montierten Zahnrädern den größten Durchmesser besitzt.

5. Schaltgetriebe nach einem Ansprüche 1 bis 3, **dadurch gekennzeichnet, dass** das gemeinsame Zahnrad (3) das kleinste unter mehreren auf einer gleichen Welle (5) montierten Zahnrädern ist, die in das Reservoir eintauchen, wenn dieses eine vorgeschriebene Menge an Öl enthält.

6. Schaltgetriebe nach einem der vorhergehenden Ansprüche, **dadurch gekennzeichnet, dass** der von dem Gehäuse (2) umschlossene Teil weniger als die Hälfte des Umfangs des gemeinsamen Zahnrads (3) ist.

7. Schaltgetriebe nach einem der vorhergehenden Ansprüche, **dadurch gekennzeichnet, dass** eine tiefste Stelle des Umfangs des gemeinsamen Zahnrads (3) nicht von dem Gehäuse (2) umschlossen ist.

8. Schaltgetriebe nach einem der vorhergehenden Ansprüche, **dadurch gekennzeichnet, dass** das Gehäuse (2) und/oder das zweite Zahnrad (4) aus einem Kunststoffmaterial bestehen.

9. Schaltgetriebe nach einem der vorhergehenden Ansprüche, **dadurch gekennzeichnet, dass** das Gehäuse (2) an einer Schaltwelle (6) des Schaltgetriebes gehalten ist.

## Claims

1. A transmission, comprising at least one drive shaft, an output shaft and several wheel sets for coupling the drive and output shaft with different speed ratios and a gearwheel pump (1) arranged as an external gear pump, which is arranged to convey lubricating oil from a reservoir of the transmission, wherein one of two mutually meshing gearwheels (3, 4) of the gearwheel pump (1) belong to one of the wheel sets, and the gearwheel pump (1) comprises a housing (2) which encloses the gearwheel (3) common to the gearwheel pump(1) and the one wheel set only over a portion of its circumference, **characterized in that** the housing (2) is movable in the direction of the axis of the common gearwheel (3) and the second gearwheel (4) is mounted in a floating manner in the housing (2).

2. A transmission according to claim 1, **characterized in that** the gearwheel (3) which is common to the wheel set and the gearwheel pump (1) is mounted on the drive shaft or the output shaft.

3. A transmission according to claim 1 or 2, **characterized in that** the gearwheel (3) which is common to the wheel set and the gearwheel pump (1) is permanently connected in a non-positive way with the drive shaft (5).

4. A transmission according to one of the preceding claims, **characterized in that** the common gearwheel (3) has the largest diameter among several gearwheels mounted on the same shaft (5).

5. A transmission according to one of the claims 1 to 3, **characterized in that** the common gearwheel (3) is the smallest one among several gearwheels mounted on the same shaft (5), which gearwheels will immerse in the reservoir when it contains a required quantity of oil.

6. A transmission according to one of the preceding claims, **characterized in that** the portion enclosed by the housing (2) is less than half of the circumference of the common gearwheel (3).

7. A transmission according to one of the preceding claims, **characterized in that** a deepest point of the circumference of the common gearwheel (3) is not enclosed by the housing (2).

8. A transmission according to one of the preceding claims, **characterized in that** the housing (2) and/or the second gearwheel (4) consist of a plastic material.

9. A transmission according to one of the preceding claims, **characterized in that** the housing (2) is held on a selector shaft (6) of the transmission.

## Revendications

1. Boîte de vitesses avec au moins un arbre d'entraînement, un arbre de sortie et plusieurs jeux de roues pour coupler les arbres d'entraînement et de sortie avec des rapports de multiplication différents et avec une pompe à engrenage (1) conçue comme une pompe à denture externe, qui est disposée de façon à transporter de l'huile de lubrification à partir d'un réservoir de la boîte de vitesses, dans laquelle l'une de deux roues dentées (3, 4) engrenant l'une dans l'autre de la pompe à engrenage (1) appartient à l'un des jeux de roues et la pompe à engrenage (1) présente un logement (2) qui entoure la roue dentée (3) commune à la pompe à engrenage (1) et à un jeu de roues sur une partie seulement de sa circonférence, **caractérisée en ce que** le logement (2) est mobile dans la direction de l'axe de la roue dentée commune (3) et la deuxième roue dentée (4) est supportée de façon flottante dans le logement (2).

2. Boîte de vitesses selon la revendication 1, **caractérisée en ce que** la roue dentée (3) commune au jeu de roues et à la pompe à engrenage (1) est montée sur l'arbre d'entraînement ou l'arbre de sortie.

3. Boîte de vitesses selon la revendication 1 ou 2, **caractérisée en ce que** la roue dentée (3) commune au jeu de roues et à la pompe à engrenage (1) est reliée durablement par adhérence à l'arbre d'entraînement (5).

4. Boîte de vitesses selon l'une des revendications précédentes, **caractérisée en ce que** la roue dentée commune (3) possède le plus grand diamètre parmi plusieurs roues dentées montées sur un même arbre (5).

5. Boîte de vitesses selon l'une des revendications 1 à 3, **caractérisée en ce que** la roue dentée commune (3) est la plus petite parmi plusieurs roues montées sur un même arbre (5) qui plongent dans le réservoir lorsque celui-ci contient la quantité prescrite d'huile.

6. Boîte de vitesses selon l'une des revendications précédentes, **caractérisée en ce que** la partie entourée par le logement (2) représente moins de la moitié de la circonférence de la roue dentée commune (3).

7. Boîte de vitesses selon l'une des revendications précédentes, **caractérisée en ce qu'**un point le plus bas de la circonférence de la roue dentée commune (3) n'est pas entouré par le logement (2).

8. Boîte de vitesses selon l'une des revendications précédentes, **caractérisée en ce que** le logement (2) et/ou la deuxième roue dentée (4) sont faits d'une matière plastique.

9. Boîte de vitesses selon l'une des revendications précédentes, **caractérisée en ce que** le logement (2) est retenu sur un axe de levier de changement de vitesses (6) de la boîte de vitesses.
